# EUROPÄISCHE PATENTSCHRIFT

(11) **EP 3 530 446 B1**
(45) Veröffentlichungstag und Bekanntmachung des Hinweises auf die Patenterteilung: **01.05.2024**
(21) Anmeldenummer: 18158665.2
(22) Anmeldetag: 26.02.2018
(51) Int. Cl.: B30B 1/10, B30B 11/02, B30B 15/00

(54) **PULVERPRESSE MIT KNIEHEBELANTRIEB UND ELEKTRISCHEM ANTRIEB**
POWDER PRESS WITH TOGGLE DRIVE AND ELECTRICAL DRIVE
PRESSE À POUDRE DOTÉE DE LEVIER À GENOUILLÈRE ET D'ENTRAÎNEMENT ÉLECTRIQUE

(43) Veröffentlichungstag der Anmeldung: 28.08.2019
(73) Patentinhaber: Osterwalder AG, 3250 Lyss (CH)
(72) Erfinder: Wehrli, Alex, 3122 Kehrsatz (CH); Sollberger, Michael, 3250 Lyss (CH); Maissen, Curdin, 8620 Wetzikon (CH); Hänni, Roland, 8049 Zürich (CH)
(74) Vertreter: BOVARD AG

(56) Entgegenhaltungen:
- EP-A1- 2 998 989
- EP-A2- 0 436 792
- EP-A2- 1 422 050
- DE-A1- 4 401 499
- DE-A1-102004 052 007
- JP-A- 2001 300 778
- JP-A- 2002 103 089
- US-A- 5 176 923

## Beschreibung

### Technisches Gebiet der Erfindung

Die Erfindung bezieht sich auf eine Pulverpresse zur Herstellung eines Presslings aus einem verpressbaren Material.

### Stand der Technik

Im Allgemeinen weisen Pressen, insbesondere Pulverpressen einen Pressenrahmen, eine obere und untere Stempelanordnung und zwischen den beiden Stempelanordnungen eine Matrizenanordnung auf. Die Stempelanordnungen und die Matrizenanordnung legen einen Formhohlraum fest, in welchen das zu verpressende, insbesondere pulverförmige Material eingefüllt wird. Zur Formung eines Presslings werden obere und untere Stempelanordnungen, umfassend mindestens eine Werkzeugebene mit einem Werkzeug bzw. mindestens einem Stempel, gegeneinander gepresst, wobei die Bewegung der Stempelanordnungen abhängig von einstellbaren Pressparametern erfolgt. Eine Stempelanordnung umfasst im einfachsten Fall einen Stempel, weist aber im Allgemeinen eine Vielzahl von Stempeln auf. Es sind auch Anordnungen mit mehreren Stempeln bekannt, um in Pressrichtung mehrere Höhenstufen zu pressen, wobei die einzelnen Stempel relativ zueinander mit unterschiedlichen Geschwindigkeiten und/oder Hubstrecken bewegt werden und in einer Werkzeugebene aufgenommen sind. In einer Pressendstellung, in welcher über einen Pressantrieb eine volle Presskraft wirkt, können die Stempelanordnungen über Festanschläge abgestützt sein, so dass eine definierte Pressposition eingenommen wird. Die sehr hohen erforderlichen Presskräfte in Pressrichtung und Energiemenge werden bei bekannten Pulverpressen weitgehend durch hydraulische, mechanische oder elektrische Antriebssysteme erzeugt.

Bei Pulverpressen zur Herstellung masshaltiger Presslinge sind auch neben Antriebsystemen zum Bewegen der Stempelanordnungen in Pressrichtung an sich bekannte hydraulische, elektrische oder sonstige angetriebene Stellantriebe zum Verstellen einzelner oberer bzw. unterer Stempelträger bzw. Stempel relativ zueinander vorgesehen.

Im Allgemeinen werden Bewegungen in einer Pulverpresse mechanisch, hydraulisch oder elektrisch erzeugt. In mechanischen Pressen ist der Bewegungsablauf im Wesentlichen vorgegeben, z.B. durch einen Kniehebelantrieb. Bei mechanischen Pressen können bei geringem Energieverbrauch und überschaubarem Wartungsaufwand hohe Hubzahlen realisiert werden. Allerdings ist die Flexibilität zur Bewegung der Stempelanordnungen vergleichsweise gering.

In bekannten hydraulischen Pressen sind zur unabhängigen Bewegung der einzelnen Stempelanordnungen geregelte hydraulische Antriebssysteme eingesetzt. Die individuelle Bewegung einzelner Stempelanordnungen bedingt eine hohe Flexibilität. Durch einen Einsatz von Messsystemen und einer darauf basierenden Regelung des Bewegungsablaufs wird eine hohe Präzision und Dynamik beim Pressvorgang erzeugt. Allerdings sind bei hydraulischen Pressen ein hoher Energiebedarf und lange Zykluszeiten zu verzeichnen. Stempelanordnungen mit den angeordneten Stempeln können direkt über eine Kolben/Zylinderanordnung abgestützt sein, wobei allerdings aufgrund der hohen Presskräfte im Allgemeinen Festanschläge erforderlich sind. Eine beim Pressverfahren auf einen Stempel wirkende Gegenkraft wird vom Hydraulikzylinder aufgenommen. Die Gegenkraft variiert in Abhängigkeit vom Stempel, so dass bei komplexen Presslingsformen jedem Stempel ein individueller Hydraulikzylinder zugeordnet ist. Demnach umfassen Hydraulikpressen eine Vielzahl von Hydraulikzylindern, welches ein komplexes System bedingt.

Elektrische Pressen umfassen zum Antrieb elektrische Antriebssysteme, z.B. elektrische Spindelantriebe auf. Hierbei lassen sich bei geringem Energiebedarf mittlere Hubzahlen realisieren, wobei der Pressvorgang mit hoher Präzision und Flexibilität und bei geringem Platzbedarf und niedrigem Wartungsaufwand möglich ist.

Aus EP 2 311 587 A1 ist eine elektrische Pulverpresse bekannt, bei denen eine obere Stempelanordnung einen oberen Spindelantrieb und die Matrizenanordnung und/oder eine untere Stempelanordnung einen unteren Spindelantrieb aufweist. Es ist auch bekannt, dass Spindelantriebe, umfassend eine Spindel/Mutter-Anordnung oder eine Mutter/Spindel-Anordnung, mit einer Motoreinheit in Wirkverbindung stehen, dessen Drehbewegung als Linearbewegung in einen Antriebsstrang übertragen wird. In der Regel wirkt die Spindelmutter über eine Kraftübertragungseinrichtung auf die obere und/oder untere Stempelplatte einer Stempelanordnung und verfährt mit dieser zusammen den Oberstempel und/oder Unterstempel in Richtung einer Hauptpressachse, welche parallel beabstandet oder koaxial zur Längsachse der Spindel verläuft. Durch einen Spindelantrieb ergibt sich ein kurzer Antriebsstrang, wodurch hohe Steifigkeit und somit eine hohe Dynamik des Pressenantriebs auch bei grossen bewegten Massen und/oder grossen Presskräften erzielt werden kann.

Die Motoreinheit kann eine Servomotor-Anordnung sein, wobei insbesondere ein Drehwinkelsensor zur Drehwinkelregelung bzw. ein Drehmomentsensor zur Drehmomentregelung sowie ein Positionssensor zur Erfassung der linearen Position der jeweiligen Stempel vorgesehen sind. Mit einer gezielten Ansteuerung einzelner Stempel wird eine flexible Prozesssteuerung ermöglicht, so dass bei einem Pressvorgang eine konstante Bewegung aller Stempel und eine Anpassung der Bewegung unter Berücksichtigung relevanter auch materialbedingter Parameter erfolgen kann.

Pulverpressen mit einem elektromechanischen Antriebssystem können zur Übertragung einer Presskraft als Hauptpresskraft, erzeugt von einem elektrischen Antrieb, ferner passive Antriebselemente wie Spindeln, Riemen, Getriebe, Exzenter und/oder Kniehebel umfassen, welche zwischen der elektrischen Antriebseinheit und einer anzutreibenden Stempelanordnung angeordnet sind. Pressen mit einem elektromechanischen Antriebssystem haben zwar einen geringeren Energiebedarf als Hydraulikpressen, allerdings sind durch die passiven Antriebselemente im Allgemeinen nur eine geringere Steifigkeit und weniger Dynamik erreichbar. Insbesondere bei servomotorischen Pulverpressen besteht die Problematik, dass eine Übertragung einer rotatorischen Bewegung in eine translatorische Bewegung von diversen physikalischen Grössen beeinflusst werden kann, so dass ein zuverlässiger und definierter Pressvorgang nur mit hohem Regelaufwand möglich ist. Ferner gelten diese Pulverpressen als stör- und verschleissanfällig, insbesondere durch eine Schlagempfindlichkeit einer umfassten Spindel und somit als kostenintensiv. Nichtlineare Antriebssysteme, insbesondere ein Kniehebelantrieb, werden demnach als ungeeignet für den Einsatz in Pulverpressen angesehen, unteranderem da sie eine maximale Presskraft nur in einem sehr begrenzten Bereich erzeugen.

Aus US 2009/0317507 A1 ist eine Pulverpresse bekannt, deren Stempel tragende Platten und eine Matrize relativ zueinander verstellbar sind. Als Antrieb für diese dient jeweils ein elektrischer Motor, wobei Platte oder Matrize mittels eines zentralen Zahnrads und zwei Getrieben mit dem Elektromotor verbunden sind. Passive Antriebssysteme sind nicht vorgesehen.

Aus JP 2001-259896 ist eine hydraulische Pulverpresse bekannt, wobei eine obere und eine untere Stempelanordnung über separate oder auch kombinierte hydraulische Antriebssysteme bewegt werden. Hierbei ist die vertikale Bewegung der oberen und der unteren Stempelanordnung über Kopplungsglieder miteinander gekoppelt. Ein Kniehebelsystem ist zwischen Hydraulikantrieb und zumindest oberer Stempelanordnung derart angeordnet, dass die Bewegung des Hydraulikzylinders auf die Matrizenanordnung und die Stempelanordnung von dem Kniehebelsystem übertragen wird, wobei die auf die Stempelanordnung übertragene Druckkraft um ein Vielfaches grösser als diejenige des eingesetzten Hydraulikzylinders ist. Als Nachteil erweist sich der dabei umfasste Hydraulikantrieb, welcher einen hohen Energiebedarf und Lärm bedingt und durch die hohen Strömungsgeschwindigkeiten von Hydrauliköl in Zusammenhang mit dem Kniehebelsystem wartungsintensiv ist.

Aus US 5 176 923 ist eine Formpressvorrichtung nach dem Oberbegriff des Anspruchs 1 bekannt, welche einen elektrischen Servomotor und einen Kniehebelmechanismus aufweist zur Übertagung der Antriebskraft des Servomotors auf die Pressform. Der Pressvorgang wird dabei über die numerische Steuerung des Servomotors gesteuert, so auch der Pressenhub der Pressform.

In EP 0 436 792 A2 sind als Töpfe ausgebildete Stempelträger beschrieben, welche an zylindrischen Flächen relativ zur Grundplatte geführt sind und welche mittels Einstellringen mit einer schraubenflächenförmigen Rampe axial verstellbar sind.

Aus DE 44 01 499 A1 ist eine Presse zur Herstellung von Dachziegeln bekannt, welche mit einem Elektromotor und einem Kniehebelmechanismus einen Bären antreibt.

Aufgabe der vorliegenden Erfindung ist es, eine Pulverpresse zur Herstellung eines Presslings aus einem verpressbaren Material vorzusehen, welche einen idealen Pressverlauf gemäss einem optimalen Verdichtungsverlauf des verpressbaren Materials ermöglicht und bei dem hohe Druckkräfte übertragen werden können. Erfindungsgemäss ist eine Pulverpresse nach Anspruch 1 vorgeschlagen.

Ausgehend von dem Stand der Technik, wird eine Pulverpresse zur Herstellung eines Presslings aus einem verpressbaren Material mit einem Pressenrahmen, ein Werkzeug mit einer oberen und/oder unteren Stempelanordnung und einer Matrizenanordnung vorgeschlagen, welche einen Formhohlraum definieren, in den das verpressbare Material einfüllbar ist. Zum Pressen komplex strukturierter Teile werden von oben und/oder unten mehrere Stempel in eine Matrizenöffnung der Matrizenanordnung eingeführt, wobei jeder Stempel auf einem Stempelträger angeordnet ist, der jeweils relativ zu einem Basisträger bzw. Grundplatte bewegbar ist. Insbesondere handelt es sich um eine Mehrplattenpresse, bei der während eines Pressverfahrens einzelne Werkzeugebenen, bzw. auch als Zusatzachsen bezeichnet, in eine individuelle Pressposition bewegt werden. Als Zusatzachse wird eine Anordnung verstanden, umfassend einen Stempel und diesen tragende, bewegende und verstellende Werkzeugkomponenten, d.h. diejenigen Elemente, welche zwischen Pressantrieb und Stempel auf Kraftflusslinien liegen und insbesondere Platte, Zylinder, Abstützeinrichtung und Führungen umfassen.

Die Pulverpresse zur Herstellung eines Presslings aus einem verpressbaren Material umfasst mindestens eine elektrische Antriebseinheit zur Erzeugung einer Hauptpresskraft, wobei die elektrische Antriebseinheit in Wirkverbindung mit der oberen und/oder unteren Stempelanordnungen und/oder der Matrizenanordnung steht, so dass die Stempelanordnungen und die Matrizenanordnung entlang einer Pressachse relativ zueinander bewegbar und gegeneinander pressbar sind.

Erfindungsgemäss umfasst die Wirkverbindung zwischen elektrischer Antriebseinheit und oberer Stempelanordnung einen Kniehebelantrieb mit mehreren Kopplungsgliedern, welcher die obere Stempelanordnung, die mehrere Zusatzachsen aufweist, entlang der Pressachse in eine Pressendstellung bewegt, wobei die Stempelanordnung mehrere Zusatzachsen aufweist, welche in individuelle Presspositionen bewegbar sind, wobei jede der Zusatzachsen einen Stempel und diesen tragende, bewegende und verstellende Werkzeugkomponenten umfasst, die zwischen Pressantrieb und Stempel auf Kraftflusslinien liegen, und wobei die auf mehreren Stempelträger angeordneten Stempel in eine Matrizenöffnung der Matrizenanordnung einführbar sind, wobei mechanische Festanschläge vorgesehen sind, die individuellen Presspositionen der Zusatzachsen festzulegen, welche Stufenhöhen des Presslings definieren, wobei Stempelträger mit jeweils einem festangesetzten Stempel in Pressendstellung kraftübertragend an diesen anliegen, und wobei zur gelenkigen Verbindung von Kopplungsgliedern des Kniehebelantriebs mittels Festkörpergelenken vorspannbare Lager vorgesehen sind.

Die erfindungsgemässe Kombination einer elektrischen Antriebseinheit mit einem Kniehebelantrieb zur Bewegung mindestens einer der Stempelanordnungen zeichnet sich gegenüber hydraulischen Pulverpressen mit Kniehebelsystem durch reduzierten Lärm, hohe Energieeffizienz und einen weitgehend wartungsarmen Antrieb aus. Die elektrische Antriebseinheit zeigt einen verbesserten Wirkungsgrad, insbesondere bei dem Einsatz permanentmagnetischer Synchron-Servoanordnungen, welche mit geringen Reibungsverlusten angetrieben werden können. Ferner ist eine Gefahrenquelle durch austretendes Hydrauliköl gebannt, welches in der Pulvermetallurgie ansonsten ein Problem darstellt. Darüber hinaus ergeben sich vorteilhaft eine hohe Präzision und gute Reproduzierbarkeit, sowie eine gute und verlässliche Regelbarkeit und damit eine dynamische Bewegungskontrolle des Pressvorgangs. Auch das Bedienen ist vereinfacht, da eine geringere Gefahr von Bedienungs- und Einstellfehlern gegeben ist.

Die elektrische Antriebseinheit umfasst in einem Ausführungsbeispiel einen Spindelantrieb, wobei ein Antriebsmotor unmittelbar auf die Spindel einwirkt, welche in Wirkverbindung mit dem Kniehebelantrieb steht und dieser wiederum auf die Stempelanordnung und/oder Matrizenanordnung einwirkt. Vorzugsweise handelt es sich bei dem Spindelantrieb um geregelte Spindelantriebe, wodurch Eigenschaften eines verwendeten Pulvermaterials sowie Eigenschaften des aus dem Pulvermaterial hergestellten Presslings berücksichtigt werden können.

Vorzugsweise ist der geregelte Spindelantrieb eine Servomotor-Anordnung mit Drehwinkel-, Drehzahl und/oder Drehmomentsensor zur Drehwinkel-, Drehzahl- und/oder Drehmomentregelung. Ferner können diese Sensoren in Zusammenwirkung mit einem Positionssensor zur Erfassung einer linearen Position des jeweiligen Stempels oder der Matrize vorgesehen sein. Demnach können Betriebsparameter erfasst, in Speichermitteln gespeichert und in Verarbeitungseinheiten weiter aufbereitet werden. Ferner können weitere Sensoren vorgesehen sein, welche eine Spindelposition und/oder eine Veränderung der Spindelposition erfassen sowie Sensoreinrichtungen zur Erfassung eines Spindeldrehmoments, welcher eingerichtet ist, einen Notstop einzuleiten bzw. einen Leerhub einzuleiten. Ferner können Kraftmess- und/oder Wegmesssysteme eingesetzt werden, welche eine Regelung bezogen auf die Kraft und/oder auf die Position erlauben.

Um eine möglichst kompakte Bauweise zu realisieren, kann ein Servomotor als Hohlwellen-Elektromotor ausgebildet sein, bei dem im Inneren der Hohlwelle das zu drehende Element des Spindelantriebs aufgenommen ist.

Zur Weiterentwicklung einer Pulverpresse mit Spindelantrieb ist zwischen Spindel oder einem eventuell angeordneten Stössel und Stempelanordnung erfindungsgemäss der Kniehebelantrieb angeordnet, so dass aufgrund der hohen Steifigkeit im Pressbereich eine hohe Präzision und Dynamik erzielt werden kann. Der Kniehebelantrieb ist als passives Antriebselement vorgesehen, welches zusammen mit der elektrischen Antriebseinheit die aufzubringende Hauptpresskraft einer elektromechanischen Pulverpresse erzeugt. Mit der Kombination von passivem und aktivem Antriebselement ist es möglich, dass die elektrische Antriebseinheit sehr kompakt aufgebaut werden kann. Die von der elektrischen Antriebseinheit aufzubringende Kraft kann im Vergleich zu rein elektrischen Pulverpressen in etwa um einen Faktor 10 reduziert werden.

In einer Ausführungsform ist eine Servomotor-Anordnung zum Antreiben des Spindelantriebs vorgesehen, wobei die von einer Servomotor-Anordnung bereitgestellten Charakteristika hinsichtlich Dynamik, Stellbereiche und Genauigkeit der Bewegungen den Anforderungen beim Pressvorgang entsprechen. Servomotor-Anordnungen können mit starker Drehzahl- und Drehmomentänderungen sowie hohem Haltemoment im Stillstand betrieben werden. Insbesondere durch die reduzierte Baugrösse der in der erfindungsgemässen Pulverpresse eingesetzten Servomotor-Anordnung kann eine gesteigerte Dynamik erzielt werden.

Im Allgemeinen umfasst eine Servomotor-Anordnung einen Servoumrichter zur Stromversorgung, dessen Dimensionierung in starkem Masse von einer auftretenden Spitzenlast (Peak-Strom) abhängig ist. Eine Spitzenlast wird weitgehend in Pressstellung erreicht. In der erfindungsgemässen elektromechanischen Pulverpresse ist die Spitzenlast um einen Faktor von ca. 10 gegenüber einer Pulverpresse mit Direktantrieb reduziert. Bei einem Direktantrieb liegt eine unmittelbare Übertragung des Antriebs auf eine Spindel und direkt von der Spindel unmittelbar oder über einen Stössel auf die Stempelanordnung vor. Durch die kleinere Grösse der in der elektromechanischen Pulverpresse eingesetzten Servomotor-Anordnung können auch die erforderlichen elektrischen Installationen, z.B. Kabeln und Vorsicherungen, vereinfacht werden.

Basierend auf Kenntnis eines optimalen kinematischen Pressverlaufs zur Herstellung masshaltiger Presskörper, ist eine darauf abgestimmte geometrische Auslegung von Kopplungsgliedern des erfindungsgemässen Kniehebelantriebs vorgesehen. Demnach können einzelne Phasen eines erzeugnisspezifischen Presszykluses, welcher z.B. Verdichten, Druckhalten und Druckentlastung aufeinander abstimmt, durch eine gezielte Dimensionierung geometrischer Parameter erreicht werden. Kinematik und Übersetzungsverhältnis werden einem idealen Verlauf eines Pressvorgangs bei hoher Reproduzierbarkeit und hohen Geschwindigkeiten angenähert.

Der in der elektromechanischen Pulverpresse integrierte Kniehebelantrieb, welcher vorzugsweise die elektrische Antriebseinheit zur Erzeugung einer Hauptpresskraft mit einem Oberkolben bzw. oberen Stempelanordnung verbindet, ist symmetrisch aufgebaut. Ausgehend von einem Antriebsstrang der elektrischen Antriebseinheit, sind ein erster und ein zweiter Hebel an jeweils einem ersten Ende der Hebel schwenkbar angelenkt. An einem zweiten Ende der jeweiligen Hebel sind jeweils schwenkbar ein erster Arm zur Verbindung mit dem Rahmen der Pulverpresse und ein zweiter Arm zur Verbindung mit der oberen Stempelanordnung angelenkt.

Ein Kniehebelantrieb zeichnet sich allgemein durch ein sich veränderndes Übersetzungsverhältnis zwischen aufgewendeter Kraft zu resultierender Kraft aus. Für einen Pressvorgang ist ein schnelles Anfahren in eine Pressstellung bzw. auch ein schnelles Ausfahren aus der Pressendstellung gewünscht, wobei letzteres für eine Freilegung des gepressten Formlings von Vorteil ist. Ein erster Abschnitt eines Presszykluses kann bei mittlerer Geschwindigkeit erfolgen, wobei mittlere Druckkräfte wirken. In der Nähe des durchgestreckten Bereichs des Kniehebelantriebs erfolgt dann die letzte Presszyklusphase vor der Pressendstellung mit geringer Geschwindigkeit und hohen Druckkräften, welche auch mit kleinen elektrischen Antriebssystemen realisierbar ist. Ein hohes Übersetzungsverhältnis in der Nähe des durchgestreckten Bereichs des Kniehebelantriebs erlaubt eine präzise Regelung der Pressstellung. Ferner ergibt sich vorteilhaft, dass das sich ändernde Übersetzungsverhältnis ohne einen Umschaltvorgang bzw. eine Unterbrechung erfolgt, so dass eine Bewegung beim Übergang von einem Eilgang in einen Pressgang ohne Unterbrechung und damit weitgehend kontinuierlich erfolgt. Der Pressling kann kontinuierlich entformt werden, ohne weiteren Belastungen beispielsweise durch das umfasste Getriebe ausgesetzt zu sein.

Eine Kinematik des Kniehebelantriebs kann derart bestimmt werden, dass der Verlauf des Übersetzungsverhältnisses dem Verlauf der Pulververdichtung entspricht, wobei die Presskraft als Funktion einer Pressbewegung ausgedrückt ist, und insbesondere mit dieser zum Ende der Pulververdichtung ansteigt.

Kniehebelantriebe in Verbindung mit Pulverpressen müssen darüber hinaus derart gestaltet und ausgelegt werden, dass bei einem Pressverfahren eine Verstellung der Pressstempel entlang der Pressrichtung in eine definierte Endposition, d.h. in die Pressendstellung, reproduzierbar ist. Insbesondere sollte ein wartungsarmer und langlebiger Kniehebelantrieb vorgesehen sein, welcher bevorzugt nur rotative Lagerungen und keine Linearführungen oder kombinierte Bewegungsabläufe umfasst.

Für einen erfolgreichen Pressvorgang zur Herstellung masshaltiger Presslinge aus einem im Wesentlichen pulverförmigen oder granulatförmigen Material ist die Einstellung der Pressendstellung von zentraler Bedeutung. Erfindungsgemäss sind mechanische Festanschläge zur Festlegung von Presspunkten von Zusatzachsen vorgesehen, welche die Stufenhöhe des Presslings bzw. Grünlings definieren. In der Pressendstellung liegen somit Stempelträger, an welchen jeweils ein Stempel angesetzt ist, fest bzw. kraftübertragend auf mechanischen Festanschlägen auf, welche in einer Ausführungsform höhenverstellbar ausgebildet sind.

Darüber hinaus sind in Pulverpressen Stempel bzw. Werkzeuge unterschiedlich lang ausgebildet und unterschiedlichen Belastungen ausgesetzt, so dass Werkzeuge über ihre Lebensdauer nachgeschliffen werden müssen. Dies bedingt, dass eine Pressteilhöhenverstellung vorzusehen ist, welche beispielsweise als zusätzlicher Antrieb üblicherweise am Pressenoberteil angeordnet ist und demnach die gesamte Basis des Oberkolbens in vertikaler Richtung verschiebt. Diese Höhenverstellung ist allerdings kostenintensiv und fügt der Maschinengeometrie weitere Fehlerquellen zu.

Wie bereits oben dargelegt, besteht bei Pulverpressen mit nichtlinearen Antriebskinematik, insbesondere solche mit einem Kniehebelantrieb, grundsätzlich die Problematik, dass eine maximale Presskraft nur in einem engen Bereich, zugespitzt formuliert, an genau einem Punkt erreicht wird. Ausserhalb des Bereichs bzw. des Punktes ist entweder die erzeugte Druckkraft nicht ausreichend, bzw. stark reduziert oder das System nicht regelbar. Erfindungsgemäss sind in Kombination mit der erfindungsgemässen elektromechanischen Pulverpresse Festanschlageinrichtungen vorgesehen, welche sowohl eine Höhenverstellung der jeweiligen Pressendstellung der umfassten Stempelanordnungen und damit die Presslinghöhe ermöglichen, als auch eine Höhenverstellung zum Ausgleich von Verschleiss oder Stauchung der eingesetzten Stempel. Die erfindungsgemäss vorgesehenen verstellbaren Festanschlageinrichtungen reduzieren die Komplexität derartiger elektromechanischer Pulverpressen und erweitern den Einsatzbereich des umfassten Kniehebelantriebs in Bezug auf Pulverpressen.

Die verstellbaren Festanschlageinrichtungen sind als Töpfe ausgebildet, wobei mehrere konzentrische Töpfe umfasst sein können, welche relativ zueinander bewegbar sind. Mit dieser Konstruktion kann bei einem begrenzten Bauraum ein grösserer Hub realisiert werden, als dies bei länglichen Elementen möglich wäre. Mittels einer individuellen Bewegung einzelner Töpfe relativ zueinander können die Höhenstufen des zu erzeugenden Presslings eingestellt und definiert werden. Mittels einer synchronisierten Bewegung aller Töpfe wird der Pressraum verändert, so dass eine Pressteilhöhenverstellung erfolgt. Dies dient zur Kompensation von Verschleiss oder Stauchung bei kürzeren oder längeren Stempeln.

In einer Ausführungsform ist als ein Verstellantrieb ein Elektromotor vorgesehen, so dass individuell und/oder synchronisiert die einzelnen Festanschlageinrichtungen bewegt werden. Demnach können die im Allgemeinen schwer zugänglichen Verstellantriebe bedienfreundlich mittels einer Steuereinheit eingesetzt werden. Dies ist insbesondere von Vorteil für eine Verstellung während eines Automatikbetriebs der Pulverpresse, in welchem eine Schutztür geschlossen ist, da ein Bedienpersonal die Verstellantriebe aktivieren kann, beispielsweise durch eine Steuereinheit.

Es kann vorgesehen sein, dass eine Höhenverstellung einer Festanschlageinrichtung mittels eines umfassten Einstellrings erfolgt, welcher in Wirkverbindung mit dem Verstellantrieb direkt oder indirekt steht. Beispielsweise kann der Einstellring mit einer Aussenverzahnung versehen sein, welche in Eingriff mit entsprechenden Antriebsrädern des Verstellantriebs steht. Zur Aktivierung der Drehbewegung des Einstellrings sind auch Riemenantriebe, Rotor/Stator-Antriebe, Spindelantriebe oder Kolben-Zylinder-Einheiten denkbar.

Ferner ist die Masshaltigkeit bei der Herstellung von Presslingen in einer elektromechanischen Pulverpresse mit einem Kniehebelantrieb dadurch verbessert werden, dass die Lagerung der Kopplungsglieder des Kniehebelantriebs möglichst ein minimales oder eliminiertes Lagerspiel aufweist. Das Lagerspiel, welches in den umfassten Lagern des Kniehebelantriebs, vorzugsweise Wälzlagern, in unterschiedlichem Masse auftreten kann, begünstigt einen asynchronen Betrieb und führt somit zu einer Fehlstellung und einer Fehlfunktion der Presse.

In der erfindungsgemässen elektromechanischen Pulverpresse ist vorgesehen, dass die Kopplungsglieder, bzw. die umfassten Hebel und Arme, des Kniehebelantriebs mittels Festkörpergelenken miteinander gelenkig verbunden sind. Ein Festkörpergelenk ist ein stoffschlüssiges Gelenk, mit welchem eine bestimmte Bewegung der Kopplungsglieder während der Aufnahme und Übertragung von Kräften und Momenten durch eine definierte Verformung eines entsprechend gestalteten Festkörpers möglich ist. Hierbei ist zwischen den Lageraufnahmen der Festkörpergelenke ein elastischer Bereich vorgesehen, welcher bei Kraftbeaufschlagung senkrecht zu einer Längsachse des Festkörpergelenks den Abstand zwischen den Lageraufnahmen vergrössert. In einem eingebauten Zustand, d.h. ohne eine wirkende Kraft, entspricht dagegen der Abstand der Lageraufnahmen exakt dem vorgegebenen Lagerachsabstand. Erfindungsgemäss kann der elastische Bereich durch Streben gebildet werden, welche in Form einer Raute die Lageraufnahmen verbinden, wobei auch eine Vielzahl von Streben vorgesehen sein können.

### Kurzbeschreibung der Zeichnungen

Im Folgenden wird die Erfindung anhand der in den Figuren dargestellten Ausführungsbeispielen näher erläutert. Es zeigen:
Fig. 1 eine schematische Darstellung eines Kniehebelantriebs, welches in einer Pulverpresse zum Bewegen einer oberen Stempelanordnung angeordnet ist;
Fig. 2 eine schematische Darstellung des Kniehebelantriebs gemäss Fig. 1 mit Festkörpergelenken;
Fig. 3 eine schematische Darstellung eines Festkörpergelenks des Kniehebelantriebs gemäss Fig. 1;
Fig. 4 eine schematische Darstellung eines verstellbaren Festanschlags;
Fig. 5 eine graphische Darstellung einer Verdichtungskurve eines Pulvers beim Pressvorgang und eine Kinematik des Kniehebelantriebs.

### Detaillierte Beschreibung der Ausführungsformen der Erfindung

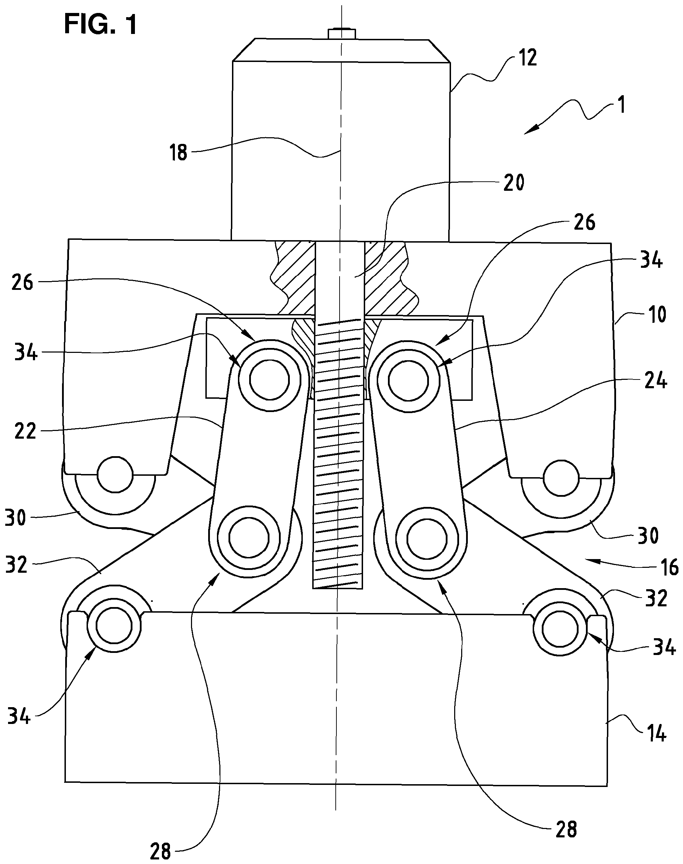

Figur 1 zeigt eine Aufsicht eines oberen Teils einer Pulverpresse 1. In Figur 1 ist lediglich ein oberer Bereich einer Pulverpresse 1 dargestellt, wobei ein Presserahmen allgemein mit 10 bezeichnet ist und dabei auch einen oberen Presserahmen 10 umfasst. An dem oberen Presserahmen 10 ist eine Antriebseinheit 12 angeordnet, welche eine elektrische Antriebseinheit 12 ist. Die Pulverpresse 1 umfasst zwischen dem oberen Presserahmen 10 und einer oberen Stempelanordnung 14 einen Kniehebelantrieb 16, welcher derart angeordnet ist, dass er in Wirkverbindung einerseits mit der Antriebseinheit 12 und andererseits mit der oberen Stempelanordnung 14 steht, um diese in Richtung einer Pressachse 18 zu bewegen. Ein von der Antriebseinheit 12 sich in Richtung oberer Stempelanordnung 14 erstreckender Antriebsstrang 20 ist an den Kniehebelantrieb 16 gekoppelt.

Der umfasste Kniehebelantrieb 16 realisiert über eine geeignete geometrische Anordnung und Ausformung gemäss dem Hebelgesetz und den Übersetzungsverhältnissen, dass die durch die eigentliche Antriebseinheit 12 realisierten Auslenkungen vervielfacht werden. Unter einem Kniehebel wird im Rahmen der Erfindung eine Einrichtung bzw. ein Element zur Kraftübertragung und/oder Kraftübersetzung verstanden, die/das zumindest zwei einarmige Hebel mit einem gemeinsamen Endpunkt (in der Regel als beweglicher Drehpunkt ausgebildet) umfasst, wobei die freien Enden der einarmigen Hebel, die gegen einen oder mehrere Körper gestützt sind, unter dem Einfluss einer an dem gemeinsamen Ende angreifenden Kraft bewegt werden können.

Der Kniehebelantrieb 16 umfasst symmetrisch zur Pressachse 18 mindestens jeweils einen ersten Hebel 22 und einen zweiten Hebel 24, welche jeweils an einem ersten Ende der Hebel 26 schwenkbar an dem Antriebsstrang 20 angelenkt sind. An einem zweiten Ende 28 jedes Hebels sind jeweils schwenkbar ein erster Arm 30 zur Verbindung mit dem oberen Presserahmen 10 der Pulverpresse 1 und ein zweiter Arm 32 zur Verbindung mit der oberen Stempelanordnung 14 angelenkt. Demnach wird ein Vier-Gelenksystem gebildet, welches die von der Antriebseinheit 12 ausgehende Bewegung auf die obere Stempelanordnung 14 überträgt, so dass diese entlang der Pressachse 18 verfahren wird. Die umfassten Gelenke werden dabei allgemein mit 34 bezeichnet und sind zwischen den Armen 30, 32 und Hebeln 22, 24 und zum Antriebsstrang 20, sowie den Anlenkpunkten zum oberen Presserahmen 10 und der oberen Stempelanordnung 14 angeordnet. Die Gelenke 34 sind bevorzugt Wälzlager.

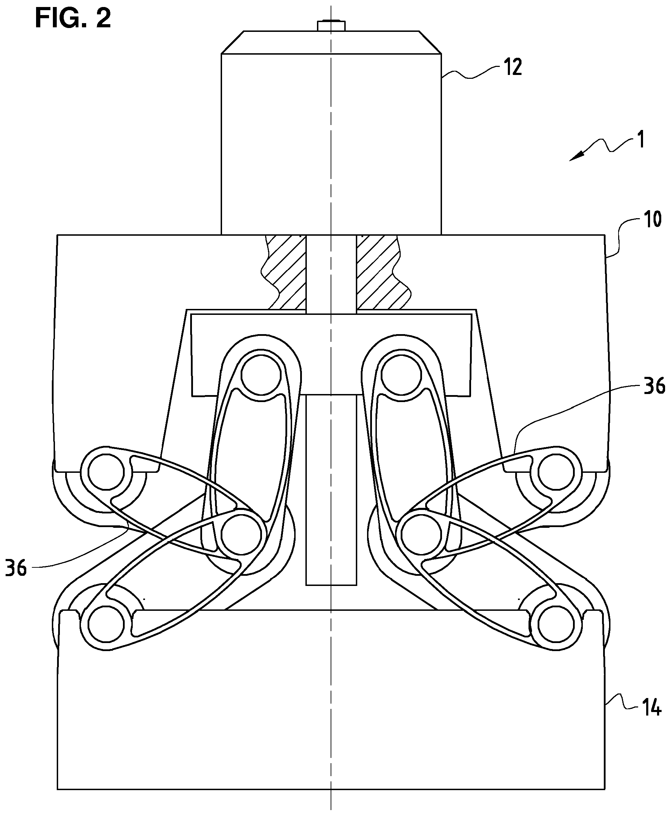

Damit eine direkte und spielfreie Übertragung der Bewegung und der erzeugten Presskraft auf die obere Stempelanordnung 14 erfolgt, ist vorgesehen, dass die Lager mittels Festkörpergelenken 36 vorgespannt werden. Festkörpergelenke 36 stellen eine biegeweiche Verbindung zwischen ersten und zweiten Bauteilen bereit. In Figur 2 ist der obere Teil einer Pulverpresse 1 dargestellt, woraus die Anordnung von Festkörpergelenken 36 im Kniehebelantrieb 16 sichtbar ist.

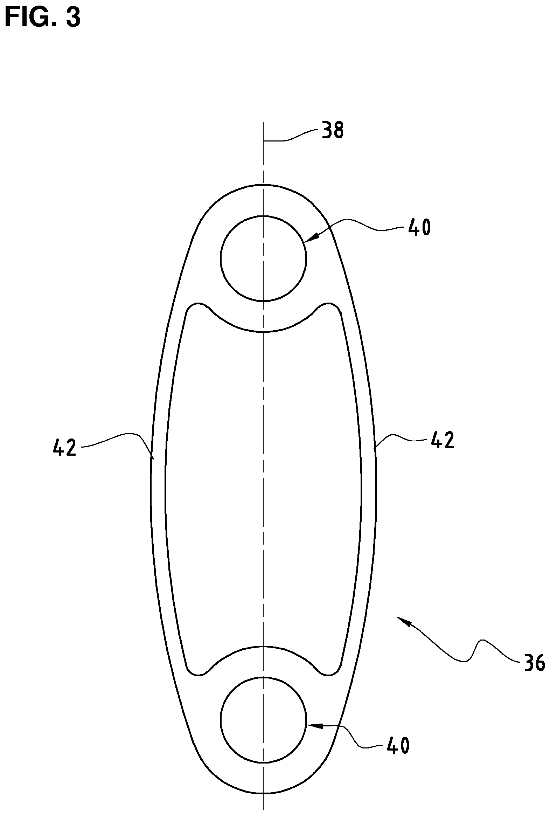

In Figur 3 sind die in der Pulverpresse 1 vorgesehenen Festkörpergelenke 36 im Einzelnen schematisch dargestellt. Um eine hochgenaue Positionierung eines Objekts relativ zu einem anderen Objekt und/oder einem ortsfesten Koordinatensystem zu realisieren, sind Festkörpergelenke 36 im Rahmen von Festkörpergelenkbaugruppen bekannt. Unter einem Festkörpergelenk wird dabei im Allgemeinen ein Körper verstanden, der eine Stelle mit verminderter Steifigkeit umfasst. Die verminderte Steifigkeit wird in der Regel durch eine lokale Querschnittsverringerung oder durch eine geeignete Formgebung realisiert.

Gemäss einer Ausführungsform dargestellt in Figur 3 ist ein Festkörpergelenk 36 ein längliches Element, welches zu einer Längsachse 38 spiegelsymmetrisch ausgebildet ist. An einem ersten Ende und einem zweiten Ende sind Lageraufnahmen 40 ausgebildet, in welche in Lagern Wellen bzw. Achsen aufnehmbar sind. Zur Erzeugung der erforderlichen verminderten Steifigkeit sind zwischen den Lageraufnahmen 40 Streben 42 vorgesehen, welche zwischen sich beispielsweise eine elliptische Form oder eine Rautenform aufspannen. Andere Formen sind denkbar, wobei einerseits eine gewisse Flexibilität in einem Bereich und andererseits eine Steifigkeit insgesamt zu beachten sind, so dass auch eine Vielzahl von Streben mit einem eventuell verstärkten zentralen Bereich vorgesehen sein kann. Durch die Formgebung des Festkörpergelenks 36 kann bei Zusammendrücken der Streben 42, d.h. bei Druckbeaufschlagung senkrecht zur Längsachse 38 ein Abstand zwischen den Lageraufnahmen 40 verändert werden, insbesondere vergrössert werden.

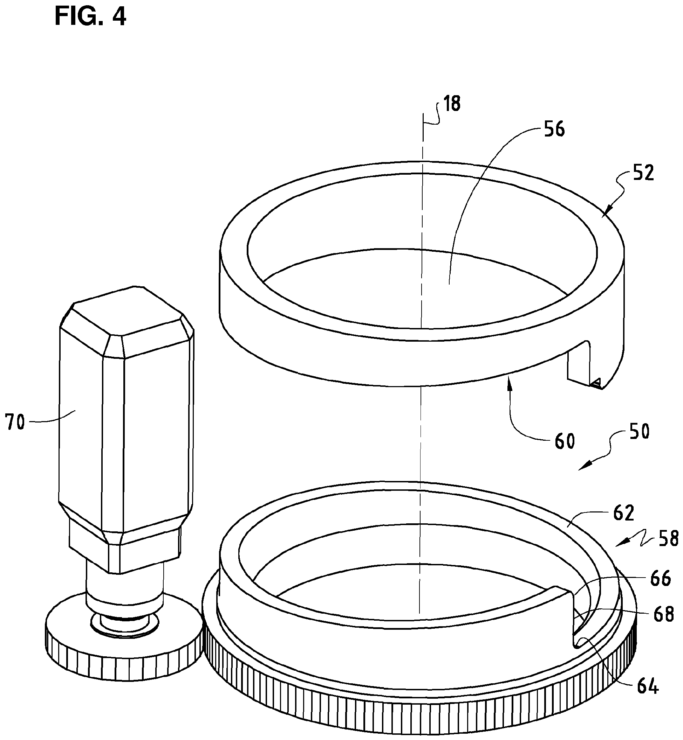

In Figur 4 ist eine Festanschlagseinrichtung 50 dargestellt, um eine Pressendstellung festzulegen. Eine Pressstellung umschreibt eine Stellung der in einer Presse eingesetzten Komponenten des Werkzeugs, wobei Stempel bevorzugt von beiden Seiten in eine Matrizenöffnung eintauchen und ein darin eingefülltes verpressbares Material komprimieren. Eine Pressendstellung ist eine Stellung, in welcher vorzugsweise die maximale Presskraft über die Stempel auf das in der Matrizenöffnung befindliche Material einwirkt. In der Pressendstellung liegen Stempelträger 52 insbesondere fest und kraftübertragend auf Festanschlägen auf. Insbesondere ist der Einsatz höhenverstellbarer Festanschlagseinrichtungen 50 vorteilhaft.

Eine Stempelanordnung, beispielsweise die obere Stempelanordnung 14, umfasst im Allgemeinen Stempelträger 52 und auf die jeweils ein Stempel (nicht dargestellt) aufgesetzt ist. Dabei weist der Stempelträger 52 eine Aufsatzfläche auf, die bevorzugt ringförmig ist, so dass durch eine zentrale Durchgangsöffnung 56 weiter innen liegende Stempel bzw. diesen Stempeln zugeordnete Elemente hindurchführbar sind. Die Anordnung ist dabei bevorzugt rotationssymmetrisch um die Pressachse 18 angeordnet, längs der die Stempel bewegbar sind. In Figur 4 ist ein Einstellring 58 dargestellt, welcher ausgebildet ist, um die Pressendstellung einzustellen. Dadurch kann insbesondere ein Werkzeugverschleiss ausgeglichen werden, welcher ansonsten zu Fehlpressungen führt. Der Stempelträger 52 liegt mit einer unteren axialen Stirnfläche 60 auf einer oberen Stirnfläche 62, d.h. einer Auflagefläche, des Einstellrings 58 auf. Dabei ist die obere Stirnfläche 62 für den zugeordneten Stempelträger 52 als schraubflächenartige Rampe in Form einer eingängigen Schraubfläche ausgebildet, und die Gangenden 64 und 66 der Schraubfläche, umfassend einen Gang, sind durch eine vertikale Verbindungsfläche 68 verbunden. Die entsprechende axiale untere Stirnfläche 60 des Stempelträgers 52 ist komplementär ausgebildet. Bei Drehen des Einstellrings 58 ergibt sich, dass je nach Drehrichtung der zugeordnete Stempelträger 52 angehoben oder abgesenkt wird. Dadurch ist die Pressendstellung über den Hub des Stempelträgers 52 in der Höhe veränderbar bzw. einstellbar. In einer Ausführungsform des Einstellrings 58 kann dieser in Wirkverbindung mit einem aussen liegenden Verstellantrieb 70 stehen und mittels diesem in Drehung versetzt werden. Beispielsweise kann die Wirkverbindung mittels entsprechender Verzahnungen von Einstellring 58 und Antriebsrad des Verstellantriebs 70 bereitgestellt werden. Denkbar sind auch Riemenantrieb, Spindelantrieb, Direktantrieb des Einstellrings 58. Der Verstellantrieb 70 kann ein elektrischer Stellantrieb sein, welcher eine individuelle Festlegung der Pressendstellung ermöglicht. Durch eine vorgesehene Steuereinheit können aber auch mehrere Verstellantriebe 70 miteinander koordiniert werden, so dass eine synchrone Höhenverstellung mehrerer Stempelträger 52 erreicht wird.

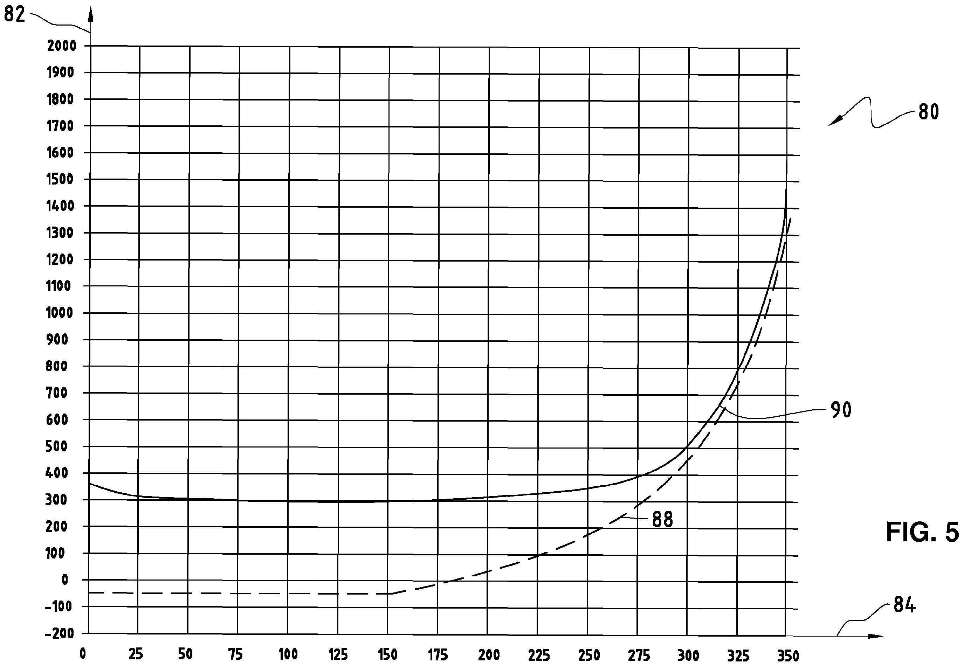

Figur 5 zeigt ein Kraft-Weg-Diagramm 80 zur Veranschaulichung eines Pressvorgangs in der Pulverpresse 1. In dem Kraft-Weg-Diagramm ist mit 82 die y-Achse bezeichnet, welche der aufzubringenden Kraft zugeordnet ist. Auf der x-Achse, mit 84 bezeichnet, wird ein Presshubweg dargestellt. Weitgehend keine Presskraft ist in der Anfangsphase eines Presszyklus erforderlich bis die obere Stempelanordnung bzw. das Werkzeug auf das in der Matrizenanordnung gefüllte verpressbare Material trifft. Diese Anfangsphase sollte dabei so schnell wie möglich erfolgen, da damit eine Zykluszeit verkürzt werden kann. Für den Pressvorgang steigt die Presskraft an und zeigt einen progressiven Presskraftverlauf, wobei in einer Pressendstellung die maximale Presskraft erreicht wird. Demnach soll eine grosse Kraft bei einem minimalen Presshubweg im Bereich der Pressendstellung erreicht werden. Dieser Verlauf ist in der Darstellung mit 88 bezeichnet und ist abhängig unteranderem von dem verpressbaren Pulvermaterial und der Füllhöhe.

Gerade dieser Verlauf eines Kraft-Weg-Verhältnisses wird in nahezu optimaler Weise von einem Kniehebelantrieb 16 erfüllt, wie dies mit der Kurve 90 dargestellt ist. So kann dieser in einer Anfangsphase mit hoher Geschwindigkeit und grosser Wegstrecke bei geringer Kraft bis nahe an den Totpunkt des Kniehebelmechanismus verfahren werden. Im Bereich des Totpunkts, d.h. bei nahezu gestreckter Stellung der umfassten Hebel bzw. Arme, kann eine grosse Presskraft übertragen werden. Hier werden zwar nur kleinste Wegstrecken zurückgelegt, aber die übertragbare Presskraft ist nahezu maximal. Darüber hinaus erlaubt die Anordnung des Kniehebelmechanismus 16, dass ein Einfahren und ein Ausfahren in bzw. aus der Pressendstellung mit hoher Geschwindigkeit erfolgen können, so dass sich insgesamt die Zykluszeit verkürzt.

In Fig. 5 zeigt die Kraft-Weg-Kurve 90 einen entsprechenden Verlauf eines Kniehebelantriebs einem angepassten Übersetzungsverhältnis. Durch Anpassung der Übersetzung und der Hebelverhältnisse des Kniehebelantriebs kann eine Annäherung an den idealen Verlauf eines Pressvorgangs, verdeutlicht durch Verlauf 88 der Pulververdichtung erreicht werden, wobei die optimierte Kraft-Weg-Kurve 90 stets oberhalb der Pulververdichtungskurve 88 verläuft.

## Patentansprüche

1. Pulverpresse (1) zur Herstellung eines Presslings aus einem verpressbaren Material, mit
- einem Pressenrahmen (10),
- einer oberen und/oder unteren Stempelanordnung (14) und einer Matrizenanordnung, welche einen Formhohlraum definieren, in den das verpressbare Material einfüllbar ist, und
- einer elektrischen Antriebseinheit (12), welche in Wirkverbindung mit den Stempelanordnungen (14) und/oder der Matrizenanordnung steht,
wobei zur Formung des Presslings die Stempelanordnungen (14) und die Matrizenanordnung mittels der elektrischen Antriebseinheit (12) entlang einer Pressachse (18) relativ zueinander bewegbar und gegeneinander pressbar sind,
wobei die Wirkverbindung zwischen elektrischer Antriebseinheit (12) und einer der Stempelanordnungen (14) einen Kniehebelantrieb (16) mit mehreren Kopplungsgliedern umfasst, welcher die Stempelanordnung (14) entlang der Pressachse (18) in eine Pressendstellung bewegt, **dadurch gekennzeichnet, dass** die Stempelanordnung (14) mehrere Zusatzachsen aufweist, welche in individuelle Presspositionen bewegbar sind, wobei jede der Zusatzachsen einen Stempel und diesen tragende, bewegende und verstellende Werkzeugkomponenten umfasst, die zwischen Pressantrieb und Stempel auf Kraftflusslinien liegen, und wobei die mehreren auf Stempelträgern angeordnete Stempel in eine Matrizenöffnung der Matrizenanordnung einführbar sind,
wobei mechanische Festanschläge (50) vorgesehen sind, die individuellen Presspositionen der Zusatzachsen festzulegen, welche Stufenhöhen des Presslings definieren, wobei Stempelträger mit jeweils einem festangesetzten Stempel in Pressendstellung kraftübertragend an diesen anliegen, und
wobei zur gelenkigen Verbindung der Kopplungsglieder des Kniehebelantriebs (16) mittels Festkörpergelenken (36) vorspannbare Lager vorgesehen sind.

2. Pulverpresse (1) gemäss Anspruch 1, **dadurch gekennzeichnet, dass** der Kniehebelantrieb (16) zwischen elektrischer Antriebseinheit (12) und der Stempelanordnung (14) angeordnet ist, wobei an einem Antriebsstrang (20) der elektrischen Antriebseinheit (12) symmetrisch zur Pressachse (18) jeweils ein erster und ein zweiter Hebel (22, 24) an jeweils einem ersten Ende (26) der Hebel (22, 24) schwenkbar angelenkt ist, und an einem zweiten Ende (28) jedes Hebels (22, 24) jeweils schwenkbar ein erster Arm (30) zur Verbindung mit dem Presserahmen (10) der Pulverpresse (1) und ein zweiter Arm (32) zur Verbindung mit der Stempelanordnung (14) angelenkt sind.

3. Pulverpresse (1) gemäss Anspruch 1 oder 2, **dadurch gekennzeichnet, dass** kinematische Abmessungen des Kniehebelantriebs (16) so bestimmt werden, dass eine Presskraft als Funktion einer Pressbewegung entsprechend einer vorgegebenen Verdichtungskurve (88) zur Herstellung des Presslings erzeugt wird.

4. Pulverpresse (1) gemäss einem der vorhergehenden Ansprüche, **dadurch gekennzeichnet, dass** die elektrische Antriebseinheit (12) einen Spindelantrieb mit einer Servomotor-Anordnung und Sensoren zur Erfassung von Drehwinkel-, Drehzahl und/oder Drehmoment zur Regelung der Servomotor-Anordnung aufweist.

5. Pulverpresse (1) gemäss Anspruch 4, **dadurch gekennzeichnet, dass** die Servomotor-Anordnung zur Erzeugung eines geregelten Drehantriebs ein Hohlwellen-Elektromotor ist.

6. Pulverpresse (1) gemäss einem der vorhergehenden Ansprüche, **dadurch gekennzeichnet, dass** die mechanischen Festanschläge (50) höhenverstellbar sind und als konzentrisch zueinander angeordnete Zylinder (52) ausgebildete Stempelträger umfassen.

7. Pulverpresse (1) gemäss Anspruch 6, **dadurch gekennzeichnet, dass** in Pressendstellung der Zylinder (52) des mechanischen höhenverstellbaren Festanschlags (50) mit einer unteren axialen Stirnfläche (60) auf jeweils einer oberen Stirnfläche (62) eines Einstellrings (58) aufliegen, die in Form einer eingängigen Schraubenfläche zur Höhenverstellung der mechanischen Festanschläge (50) ausgebildet ist.

8. Pulverpresse (1) gemäss Anspruch 7, **dadurch gekennzeichnet, dass** die untere axiale Stirnfläche (60) des mechanischen höhenverstellbaren Festanschlags (50) komplementär zur oberen Stirnfläche (62) des Einstellrings (58) ausgebildet ist, so dass durch Drehen des Einstellrings (58) mittels eines Stellantriebs (70) eine Höhenverstellung des mechanischen Festanschlags (50) erfolgt.

9. Pulverpresse (1) gemäss einem der Ansprüche 7 bis 8, **dadurch gekennzeichnet, dass** durch ein synchronisiertes Drehen der Einstellringe (58) eine Pressteilhöhenverstellung erfolgt.

10. Pulverpresse (1) gemäss Anspruch 9, **dadurch gekennzeichnet, dass** der Stellantrieb (70) ausgebildet ist als ein Elektromotor zum individuellen und synchronen Antreiben der Einstellringe (58).

11. Pulverpresse (1) gemäss einem der vorhergehenden Ansprüche, **dadurch gekennzeichnet, dass** die Festkörpergelenke (36) Lageraufnahmen (40) aufweisen, welche mittels Streben (42) miteinander verbunden sind, die in einer Rautenform angeordnet sind.

## Claims

1. Powder press (1) for producing a pressed article from a pressable material, having
- a press frame (10),
- an upper and/or lower punch assembly (14) and a die assembly, which define a molding cavity, into which the pressable material is able to be filled, and
- an electric drive unit (12) which is operatively connected to the punch assemblies (14) and/or the die assembly,
whereby, in order to form the pressed article, the punch assemblies (14) and the die assembly are movable relative to one another along a pressing axis (18) and are pressable against one another by means of the electric drive unit (12),
whereby the operative connection between electric drive unit (12) and one of the punch assemblies (14) comprises a toggle lever drive (16), with a plurality of coupling members, which toggle lever drive moves the punch assembly (14) along the pressing axis (18) into a pressing end position,
**characterized in that**
the punch assembly (14) has a plurality of additional axes, which are movable in individual pressing positions, whereby each of the additional axes comprises a punch and tool components supporting, moving and adjusting the punch, and which lie on lines of force flow between press drive and punch, and whereby the plurality of punches arranged on punch carriers are insertable into a die opening of the die assembly,
whereby mechanical fixed stops (50) are provided, which are to determine individual pressing positions of the additional axes, which define step heights of the pressed article, whereby punch carriers each with a fixed punch in the final pressing position rest against these in a force-transmitting manner, and
whereby preloadable bearings are provided for the articulated connection of the coupling members of the toggle lever drive (16) by means of solid-state joints (36).

2. Powder press (1) according to claim 1, **characterized in that** the toggle lever drive (16) is arranged between the electric drive unit (12) and the punch assembly (14), whereby, on a drive train (20) of the electric drive unit (12), a first and a second lever (22, 24) are each pivotably hinged to in each case a first end (26) of the levers (22, 24) symmetrically to the pressing axis (18), and a first arm (30) for connection to the press frame (10) of the powder press (1) and a second arm (32) for connection to the punch assembly (14) are each pivotably hinged to a second end (28) of each lever (22, 24).

3. Powder press (1) according to claim 1 or 2, **characterized in that** kinematic dimensions of the toggle lever drive (16) are determined in such a way that a pressing force is produced as a function of a pressing movement in accordance with a predefined compaction curve (88) in order to produce the pressed article.

4. Powder press (1) according to one of the preceding claims, **characterized in that** the electric drive unit (12) has a spindle drive with a servo motor assembly and sensors for detecting the rotation angle, rotational speed and/or torque in order to regulate the servo motor assembly.

5. Powder press (1) according to claim 4, **characterized in that** the servo motor assembly for generation of a regulated rotary drive is a hollow shaft electric motor.

6. Powder press (1) according to one of the preceding claims, **characterized in that** the mechanical fixed stops (50) are height-adjustable and comprise punch carriers configured as cylinders (52) arranged concentrically to one another.

7. Powder press (1) according to claim 6, **characterized in that**, in the pressing end position, the cylinders (52) of the mechanical height-adjustable fixed stop (50) having a lower axial end face surface (60) each rest on an upper end face surface (62) of a setting ring (58), which is configured in the form of a single-thread screw face for height adjustment of the mechanical fixed stops (50).

8. Powder press (1) according to claim 7, **characterized in that** the lower axial end face surface (60) of the mechanical height-adjustable fixed stop (50) is configured in a complementary way with respect to the upper end face surface (62) of the setting ring (58), such that through rotation of the setting ring (58) by means of an actuating drive (70) a height adjustment of the mechanical fixed stop (50) takes place.

9. Powder press (1) according to one of the claims 7 to 8, **characterized in that** through a synchronized rotation of the setting rings (58) a pressing height adjustment takes place.

10. Powder press (1) according to claim 9, **characterized in that** the actuating drive (70) is configured as an electric motor for individual and synchronous driving of the setting rings (58).

11. Powder press (1) according to one of the preceding claims, **characterized in that** the solid-body joints (36) have bearing receptacles (40) which are connected to one another by means of struts (42) which are arranged in a diamond form.

## Revendications

1. Presse à poudre (1) pour la production d'un article compacté à partir d'un matériau compressible, ayant
- un cadre de presse (10) ;
- un assemblage de poinçons supérieurs et/ou inférieurs (14) et une matrice, qui définissent une cavité de moulage, qui peut être remplie de matériau compressible, et
- une unité d'entraînement électrique (12) qui est reliée de manière opérationnelle aux assemblages de poinçons (14) et/ou à la matrice,
les assemblages (14) et la matrice étant mobiles l'un par rapport à l'autre le long d'un axe de pression (18) et étant compressibles l'un contre l'autre au moyen de l'unité d'entraînement électrique (12) afin de former l'article pressé,
le lien opérationnel entre l'unité d'entraînement électrique (12) et l'un des assemblages de poinçons (14) comprenant un levier à genouillère (16) pourvu d'une pluralité d'éléments de couplage, lequel levier à genouillère (16) déplaçant l'assemblage de poinçon (14) le long de l'axe de pression (18) dans une position d'extrémité de pression,
**caractérisé en ce que**
l'assemblage de poinçons (14) possède une pluralité d'axe additionnels, qui sont déplaçables dans des positions de pression individuelles, chacun des axes additionnels comprenant un poinçon et des composants d'outils supportant, déplaçant et ajustant le poinçon, et qui se situent sur des lignes de flux de force entre l'entraînement de la presse et le poinçon, et la pluralité de poinçons agencée sur des porte-poinçons étant insérables dans une ouverture de la matrice,
des arrêts mécaniques fixes (50) étant prévus pour déterminer les positions de pression individuelles des axes additionnels, qui définissent les hauteurs de seuil pour l'article compacté, des porte-poinçons comportant chacun un poinçon fixe dans la position de pression finale reposant contre ceux-ci de manière à transmettre la force, et
des roulements préchargeables étant fournis pour la connexion articulée des éléments de couplage de levier à genouillère (16) au moyen de joints à l'état solide (36).

2. Presse à poudre (1) selon la revendication 1, **caractérisée en ce que** le levier à genouillère (16) est agencé entre l'unité d'entraînement électrique (12) et l'assemblage de poinçons (14), un premier et un deuxième leviers (22, 24) étant chacun articulé de manière pivotante respectivement à une première extrémité (26) des leviers (22, 24) symétriquement à l'axe de pression (18) au niveau d'une chaîne cinématique (20) de l'unité d'entraînement électrique (12), et un premier bras (30) pour la connexion au cadre de presse (10) de la presse à poudre (1) et un deuxième bras (32) pour la connexion à l'assemblage de poinçons (14) étant chacun articulé de manière pivotante à une deuxième extrémité (28) de chaque levier (22, 24).

3. Presse à poudre (1) selon la revendication 1 ou 2, **caractérisée en ce que** des dimensions cinématiques du levier à genouillère (16) sont déterminées de telle manière qu'une force de pression est produite en fonction d'un mouvement de pression conformément à une courbe de compactage prédéfinie (88) afin de produire l'article compacté.

4. Presse à poudre (1) selon l'une des revendications précédentes, **caractérisée en ce que** l'unité d'entraînement électrique (12) possède un entraînement à broche avec un ensemble de servomoteurs et de capteurs pour la détection de l'angle de rotation, de la vitesse de rotation et/ou de couple afin de réguler l'assemblage du servomoteur.

5. Presse à poudre (1) selon la revendication 4, **caractérisée en ce que** l'assemblage du servomoteur pour la génération d'un entraînement rotatif régulé est un moteur électrique à arbre creux.

6. Presse à poudre (1) selon l'une des revendications précédentes, **caractérisée en ce que** les arrêts mécaniques fixes (50) sont ajustables en hauteur et comprennent des porte-poinçons configurés comme des cylindres (52) agencés de manière concentrique les uns par rapport aux autres.

7. Presse à poudre (1) selon la revendication 6, **caractérisée en ce que**, dans la position d'extrémité de pression, les cylindres (52) de l'arrêt mécanique fixe (50) ayant une surface faciale d'extrémité axiale inférieure (60) reposent chacun sur une surface faciale d'extrémité supérieure (62) d'un anneau de réglage (58), qui est configurée en forme d'une face de vis à filetage unique pour l'ajustement en hauteur des arrêts mécaniques fixes (50).

8. Presse à poudre (1) selon la revendication 7, **caractérisée en ce que** la surface faciale d'extrémité axiale inférieure (60) de l'arrêt mécanique fixe (50) est configurée de manière complémentaire par rapport à la surface faciale d'extrémité supérieure (62) de l'anneau de réglage (58), de telle sorte qu'un ajustement en hauteur de l'arrêt mécanique fixe (50) se produise par rotation de l'anneau de réglage (58) au moyen d'un dispositif d'actionnement (70).

9. Presse à poudre (1) selon l'une des revendications 7 ou 8, **caractérisée en ce qu'**un ajustement en hauteur de l'arrêt mécanique fixe (50) se produise à travers une rotation synchronisée des anneaux de réglage (58).

10. Presse à poudre (1) selon la revendication 9, **caractérisée en ce que** le dispositif d'actionnement (70) est configuré comme un moteur électrique pour la conduite individuelle et synchrone des anneaux de réglage (58).

11. Presse à poudre (1) selon l'une des revendications précédentes, **caractérisée en ce que** les joints à l'état solide (36) possèdent des réceptacles de roulement (40) qui sont reliés les uns aux autres au moyen d'étais (42) agencés sous forme de diamant.
